# EUROPÄISCHE PATENTSCHRIFT

(11) **EP 3 376 334 B1**
(45) Veröffentlichungstag und Bekanntmachung des Hinweises auf die Patenterteilung: **19.08.2020**
(21) Anmeldenummer: 18157295.9
(22) Anmeldetag: 19.02.2018
(51) Int. Cl.: G05G 5/03, G05G 1/44

(54) **PEDALKRAFTSIMULATIONSANORDNUNG SOWIE KRAFTFAHRZEUG**
PEDAL POWER SIMULATION ASSEMBLY AND MOTOR VEHICLE
SYSTÈME DE SIMULATION DE FORCE EXERCÉE SUR UNE PÉDALE ET VÉHICULE AUTOMOBILE

(30) Priorität: 15.03.2017 DE 102017204343
(43) Veröffentlichungstag der Anmeldung: 19.09.2018
(73) Patentinhaber: ZF Friedrichshafen AG, 88046 Friedrichshafen (DE)
(72) Erfinder: Mäder, Fred, 97532 Üchtelhausen (DE); Tulaczko, Boleslaw, 97453 Schonungen (DE)
(74) Vertreter: ZF Friedrichshafen AG

(56) Entgegenhaltungen:
- EP-A2- 3 267 282
- DE-A1-102015 202 875
- US-A1- 2011 056 326

## Beschreibung

Die Erfindung betrifft eine Pedalkraftsimulationsanordnung mit einer Gleitführung, wenigstens einem darin axial verschiebbar angeordneten Gleitstück und einer Kraftspeicheranordnung zur Erzeugung einer Rückstellkraft auf das wenigstens eine Gleitstück, wobei die Kraftspeicheranordnung wenigstens eine Kraftspeichereinheit aufweist, die seitlich am Gleitstück angreift.

Bei sogenannten Clutch-by-wire-Systemen ist ein Kupplungspedal vorhanden, das lediglich ein Positionssignal abgeben soll, das aber nicht mit einer hydraulischen Strecke, insbesondere einem Geberzylinder, verbunden ist. Die Betätigung der Kupplung erfolgt mittels eines Aktuators. Das Kupplungspedal dient der Erfassung eines Fahrerkupplungswunsches.

Aufgrund des Wegfalls der hydraulischen Strecke muss die durch die hydraulische Strecke bereitgestellte Gegenkraft hinter dem Pedal durch eine Simulationsanordnung dargestellt werden. Diese soll die Kraftkennlinie, die die hydraulische Strecke bereitstellt, simulieren, so dass die Haptik der Kupplungspedalbetätigung für den Fahrer gleich bleibt.

Die bekannten Pedalkraftsimulationsanordnungen, wie z.B. die DE 2015 202875 A1, die als nächstliegender Stand der Technik betrachtet wird, verwenden dabei Kraftspeicher, insbesondere Federn, die einen teilweise komplizierten Aufbau haben und dabei bis zu 5 Federn benötigen, um die gewünschte Kennlinie zu erzeugen.

Ausgehend hiervon ist es Aufgabe der vorliegenden Erfindung, eine Pedalkraftsimulationsanordnung anzugeben, die gewünschte Kennlinien auf möglichst einfache Art und Weise herstellt und dabei bauraumoptimiert ist.

Zur Lösung dieses Problems wird vorgeschlagen, dass die seitlich am Gleitstück angreifende Kraftspeichereinheit über die Mittellinie des Gleitstücks in das Gleitstück eingreift. Als Gleitstück und Gleitführung werden dabei alle Anordnungen angesehen, bei denen sich das eine Bauteil innerhalb des anderen Bauteils bewegt und das äußere Bauteil das Innere zumindest streckenweise führt. Es wird also nicht auf einen kreisrunden Querschnitt abgezielt. In der Literatur werden Gleitstück und Gleitführung oft als Kolben und Zylinder bezeichnet. Da das Gleitstück aber nicht abdichtet und auch keine Raumtrennung vorgesehen ist werden in der vorliegenden Erfindung die Begriffe Gleitstück und Gleitführung bevorzugt.

Damit eine Axialbewegung des Gleitstücks gegenüber der Gleitführung stattfinden kann besitzt das Gleitstück jedoch innerhalb der Gleitführung zumindest streckenweise parallel zueinander angeordnete Außenflächenbereiche. Dies ist bei allen Quadern oder Zylindern der Fall. Dementsprechend kann auch eine Mittellinie als Linie zwischen den parallelen Außenflächen definiert werden. Abzustellen ist dabei auf die Richtung, die sich aus der Kraftwirkungsrichtung der Kraftspeichereinheit ergibt. Erfindungsgemäß ist nunmehr vorgesehen, dass die Kraftspeichereinheit über die Mittellinie in das Gleitstück hineinreicht. Dadurch ergeben sich gleich zwei positive Effekte:
Zum einen kann Bauraum eingespart werden, da ein Teil des Kraftspeichers im Gleitstück angeordnet ist. Zum anderen ergibt sich eine vorteilhafte Kraftkennlinie, die nur durch eine Lagerung des Kraftspeichers oberhalb der Mittellinie möglich ist.

Vorzugsweise kann die Kraftspeichereinheit mehr als 60 % des Durchmessers oder der Höhe des Gleitstücks durchqueren. Weiterhin kann die Kraftspeichereinheit mehr als 70 % des Durchmessers oder der Höhe des Gleitstücks durchqueren. Weiterhin kann die Kraftspeichereinheit mehr als 80 % des Gleitstücks oder des Durchmessers des Gleitstücks durchqueren. Weiterhin kann die Kraftspeichereinheit mehr als 90 % des Durchmessers oder der Höhe des Gleitstücks durchqueren. Je weiter die Kraftspeicheranordnung in das Gleitstück hineinragt, desto mehr Bauraum kann eingespart werden.

Es kann in Bezug auf die Kennlinie allerdings notwendig sein, die Einbautiefe zu begrenzen. Vorteilhafterweise kann die Kraftspeichereinheit mehr als 60 % des Durchmessers oder der Höhe des Gleitstücks durchqueren, und weniger als 90 %. Weiterhin kann die Kraftspeichereinheit weniger als 80 % oder weniger als 70 % des Gleitstücks durchqueren. Insbesondere kann sich in Abhängigkeit der gewünschten Kennlinie ergeben, dass die Kraftspeichereinheit zwischen 60 % und 70 % des Durchmessers oder der Höhe des Gleitstücks durchquert oder zwischen 70 % und 80 % des Durchmessers oder der Höhe oder zwischen 80 % und 90 % des Durchmessers oder der Höhe.

Vorteilhafterweise kann die Kraftspeichereinheit gegenüber der Gleitführung abgestützt sein. Dies ermöglicht es, die Pedalkraftsimulationsanordnung als Montageeinheit herzustellen.

Vorteilhafterweise kann die Pedalkraftsimulationsanordnung genau eine seitlich angreifende Kraftspeichereinheit aufweisen. Dies ergibt sich unter anderem durch die Angriffsstelle der Kraftspeichereinheit oberhalb der Mittellinie. Dadurch ist die Pedalkraftsimulationsanordnung in radialer Richtung sehr platzsparend ausgestaltet.

Vorzugsweise kann die Kraftspeichereinheit drehbar gelagert sein. Dabei kann die Kraftspeichereinheit bevorzugt als Übertotpunktelement ausgebildet sein. D. h., dass die Kraftwirkung der Kraftspeichereinheit in Abhängigkeit der Axialposition des Gleitstücks variiert.

Vorteilhafterweise kann die Pedalkraftsimulationsanordnung eine zweite Kraftspeichereinheit aufweisen, die an einem Ende des Gleitstücks aufgreift. Diese ist dementsprechend nicht seitlich zum Gleitstück angeordnet. Dabei stellt die am Ende des Gleitstücks angreifende Kraftspeichereinheit die Hauptgegenkraft zur Verfügung, während die seitlich angreifende Kraftspeichereinheit diese Grundkennlinie variiert. Dadurch erhält man das die gewünschte Gesamtkraftkennlinie als Überlagerung zweier Kennlinien.

Vorteilhafterweise können die Mittelachsen der Kraftspeichereinheit und die Mittelachse des Gleitstücks einen Winkel einschließen. Dadurch kann eine Variation der Kennlinie der zweiten Kraftspeichereinheit erzielt werden.

Vorzugsweise kann wenigstens eine Kraftspeichereinheit als Federanordnung ausgebildet sein. Dabei können beispielsweise beide Kraftspeichereinheiten als Schraubenfedern ausgebildet sein.

Vorzugsweise kann wenigstens eine Kraftspeichereinheit wenigstens ein Gelenkgehäuse und/oder Gelenkschuh aufweisen. Über diese kann die Kraftspeichereinheit, insbesondere eine als Schraubenfeder ausgebildete Kraftspeichereinheit, geführt und gelagert werden. Dies ist insbesondere bei der seitlich angreifenden Kraftspeichereinheit bevorzugt. Die an einem Ende des Gleitstücks angreifende Kraftspeichereinheit kann beispielsweise auch über die Gleitführung geführt werden.

Vorteilhafterweise kann die Pedalkraftsimulationsanordnung wenigstens ein Dichtelement zur Abdichtung der Gleitführung gegenüber dem Außenraum aufweisen. Dann kann die Pedalkraftsimulationsanordnung in den Motorraum hineinragen.

Vorzugsweise kann das Dichtelement als Dichtkappe ausgebildet sein. Das Dichtelement kann dann den gesamten Querschnitt der Gleitführung abdichten. Die Gleitführung muss dabei keinen kreisförmigen Querschnitt aufweisen, insbesondere kann die Gleitführung auch einen rechteckigen oder sonstigen Querschnitt besitzen.

Vorzugsweise kann das Dichtelement am Ende der Gleitführung angeordnet sein. Insbesondere kann es bei einer Ausgestaltung als Dichtkappe auf das Ende der Gleitführung aufgesteckt werden. Das Dichtelement muss die Pedalkraftsimulationsanordnung lediglich gasdicht abschließen, es muss grundsätzlich keine besonderen Kräfte aushalten.

Vorteilhafterweise kann das Dichtelement an der Motorseite der Pedalkraftsimulationsanordnung angeordnet sein. Auf dieser Seite befinden sich keinerlei bewegte Elemente, weswegen das Dichtelement an dieser Seite besonders einfach anbringbar ist und auf einfache Art und Weise eine Abdichtung der Gleitführung herstellbar ist.

Vorzugsweise kann das Dichtelement wenigstens einen Clip zur Befestigung des Dichtelementes an der Gleitführung aufweisen. Ein Clipverschluss ist besonders einfach an der Gleitführung befestigbar und für die Montage vorteilhaft.

Vorteilhafterweise kann das Dichtelement einen Gelenkabschnitt zur Führung einer Feder aufweisen. Die Pedalkraftsimulationsanordnung besitzt wenigstens einen Kraftspeicher zur Erzeugung einer Kennlinie, die eine hydraulische Strecke simulieren soll. Oft bestehen die Kraftspeicher aus Federn, beispielsweise Schraubenfedern. Das Dichtelement kann dann zur Führung einer Feder benutzt werden, die sich am Endabschnitt der Gleitführung abstützt. In diesem Fall muss das Dichtelement zur Aufnahme der durch die federübertragenden Kräfte ausgebildet sein.

Vorzugsweise kann die Pedalkraftsimulationsanordnung einen Lagerschild zum Lagern der Pedalkraftsimulationsanordnung aufweisen. Bekannte Pedalkraftsimulationsanordnungen besitzen lediglich einen oder zwei Gelenkabschnitte zum Lagern. Das Lagerschild ermöglicht es, die Pedalkraftsimulationsanordnung gleichzeitig zu lagern und auch den Fahrgastraum und den Motorraum voneinander gasdicht zu trennen. Das Lagerschild hat dementsprechend eine Doppelfunktion, die die Funktion des Dichtelementes unterstützt.

Vorteilhafterweise kann das Dichtelement als Gehäuseabschnitt ausgebildet sein. D. h., dass die Gleitführung an einem Ende offen ausgestaltet ist und das Dichtelement die komplette Seitenwand der Gleitführung darstellt.

Um auch bei Vorhandensein eines Gelenkabschnitts zur Führung einer Feder nicht die volle Kraft der Feder auf das Dichtelement wirken zu lassen, können an dem Ende der Gleitführung, an dem das Dichtelement angeordnet ist, Stütznasen oder ähnliches angebracht sein, an denen sich die Feder abstützen kann. Dann verhindert der Gelenkabschnitt lediglich ein seitliches verrutschen der Feder, muss aber keinerlei Axialkräfte stemmen. Dadurch kann das Dichtelement einfacher hergestellt werden.

Vorteilhafterweise kann das Dichtelement zumindest teilweise aus Kunststoff bestehen. Insbesondere kann es als Kunststoff-Spritzgussteil hergestellt sein. Dadurch ergibt sich eine große Freiheit in der Formgebung.

Vorzusgweise umfasst die Pedalkraftsimulationsanordnung eine Sensoranordnung. Die Sensoranordnung kann einen Hall-Sensor umfassen. Der Hall-Sesnor kann beispielsweise in oder an der Gleitführung angeordnet sein und mit einem Mageneten im Gleitstück zusammenwirken.

Bevorzugt ist die Sensoranordnung hinter einem Lagerschild oder einer anderen Dichteinheit angeordnet. Dann ist die Sensoranordnung in Einbaulage im Motorraum angeordnet, was die Verkabelung wesentlich vereinfacht, da diese nicht mehr durch die Spritzwand geführt werden muss.

Daneben betrifft die Erfindung eine Kupplungspedalanordnung mit einem Kupplungspedal und einer Pedalkraftsimulationsanordnung wie beschrieben.

Daneben betrifft die Erfindung ein Kraftfahrzeug mit einer Pedalkraftsimulationsanordnung. Das Kraftfahrzeug zeichnet sich dadurch aus, dass die Pedalkraftsimulationsanordnung wie beschrieben ausgebildet ist.

Weitere Vorteile, Merkmale und Einzelheiten der Erfindung ergeben sich aus der folgenden Beschreibung von Ausführungsbeispielen und Figuren. Dabei zeigen:
- Fig. 1: ein Kraftfahrzeug,
- Fig. 2: eine Pedalkraftsimulationsanordnung in einer ersten Ansicht,
- Fig. 3: eine Pedalkraftsimulationsanordnung in einer zweiten Ansicht,
- Fig. 4: eine Pedalkraftsimulationsanordnung in einer dritten Ansicht,
- Fig. 5: eine Pedalkraftsimulationsanordnung in einer vierten Ansicht, und
- Fig. 6: einen Gehäuseabschnitt.

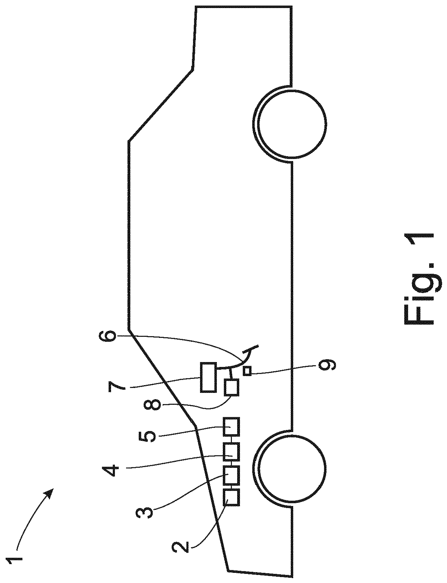

Figur 1 zeigt ein Kraftfahrzeug 1 mit einer Antriebseinheit 2, einer Kupplung 3, einem Kupplungsaktuator 4 und einem Getriebe 5. Dabei wird die Kupplung 3 mittels des Kupplungsaktuators 4 betätigt. Die Antriebseinheit 2 kann als Verbrennungsmotor und/oder Elektromotor ausgebildet sein.

Weiterhin befindet sich im Kraftfahrzeug ein Pedal 6, das an einem Pedalblock 7 gelagert ist und mit einer Pedalkraftsimulationsanordnung 8 verbunden ist. Weiterhin ist eine Sensoranordnung 9 vorgesehen, der die Stellung des Pedals 6 sensieren kann, und daraus Steuerungsbefehle für den Kupplungsaktuator 4 abzuleiten.

Die Pedalkraftsimulationsanordnung 8 simuliert dabei die Gegenkraft einer hydraulischen Strecke auf das Pedal 6, wie sie sich bspw. in Kraftfahrzeugen mit manuellen Schaltgetrieben findet. Da diese Strecke in einem Kraftfahrzeug 1 mit e-clutch nicht mehr vorhanden ist wird sie durch die Pedalkraftsimulationsanordnung 8 gestellt.

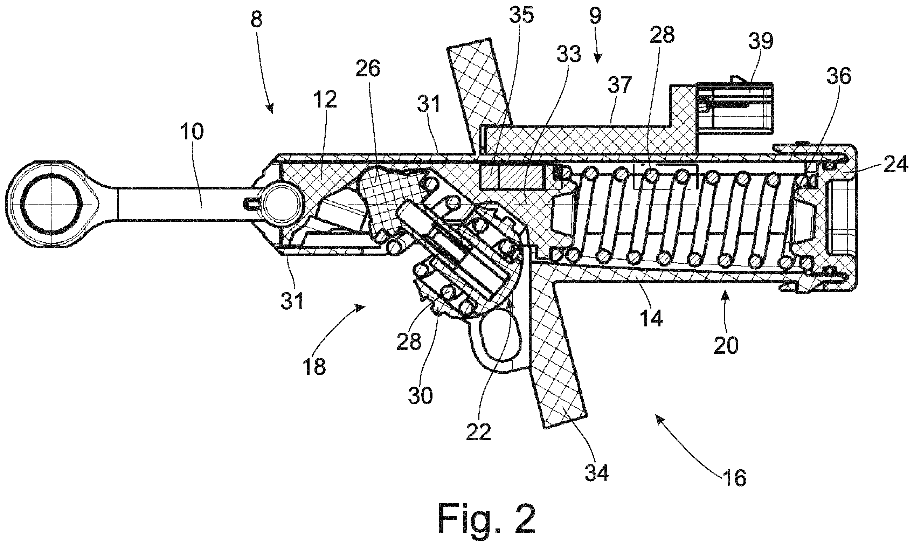

Figur 2 zeigt eine Pedalkraftsimulationsanordnung 8 im Querschnitt. Der Stößel 10 dient dabei der Verbindung mit dem Pedal 6. Der Stößel 10 ist mit einem Gleitstück 12 verbunden, der in einer Gleitführung 14 axial beweglich angeordnet ist. Auf das Gleitstück 12 wirkt eine Kraftspeicheranordnung 16 mit zwei Kraftspeichereinheiten 18 und 20. Die Kraftspeichereinheiten 18 und 20 sind gleitführungsseitig jeweils am Gehäuseabschnitt 22 und dem Dichtelement 24 gelagert, wobei das Dichtelement 24 auch als Gehäuseabschnitt fungiert. Die Kraftspeichereinheit 18 umfasst einen Gelenkschuh 26, eine Schraubenfeder 28 und ein Gelenkgehäuse 30. Die Kraftspeichereinheit 20 umfasst die Schraubenfeder 28, die Führung und Lagerung der Kraftspeichereinheit 20 findet im Wesentlichen in der Gleitführung 14 statt.

Über die parallelen Außenflächen 31 des Gleitstücks 12 lässt sich leicht eine Mittellinie 33 ermitteln. Diese liegt parallel zur Längsachse des Gleitstücks 12, wobei bei diesem Querschnitt unerheblich ist, ob das Gleitstück 12 einen kreisförmigen oder quadratischen oder sonstigen rechteckigen Querschnitt hat. Die Mittellinie 33 liegt dabei mehr oder weniger senkrecht auf der Längsachse der Kraftspeichereinheit 18, zumindest in der Stellung, in der die Kraftspeichereinheit 18 ihre kürzeste Ausdehnung hat. Da die Kraftspeichereinheit 18 als Übertotpunktfeder ausgebildet ist, nimmt sie verschiedene Positionen gegenüber dem Gleitstück 12 und damit auch gegenüber der Mittellinie 33 ein. Unabhängig von der Anordnung der Kraftspeichereinheit 18 ist die Mittellinie 33 aber immer parallel zur Längsachse des Gleitstücks 12.

Der Gelenkschuh 26 und damit die Kraftspeichereinheit 18 greift dabei über die Mittellinie 33 in das Gleitstück 12 ein. Bei der in Figur 2 gezeigten Ausgestaltung greift die Kraftspeichereinheit 18 sogar mehr als 90 % ein.

Das Dichtelement 24 dichtet die Gleitführung 14 gegenüber dem Außenraum ab. Dadurch kann die Gleitführung 14 beispielsweise in den Motorraum hineinragen. Das Dichtelement 24 ist an der Motorseite der Pedalkraftsimulationsanordnung 8 angeordnet. Dabei ist das Dichtelement 24 am Ende der Gleitführung 14 angeordnet. Es ist als Dichtkappe ausgebildet und kann so auf das Ende der Gleitführung aufgeschoben werden.

Entsprechend umfasst die Pedalkraftsimulationsanordnung 8 auch ein Lagerschild 34, mit dem der Innenraum des Kraftfahrzeugs 1 gegenüber dem Motorraum abdichtbar ist und über den die Pedalkraftsimulationsanordnung 8 lagerbar ist.

Das Dichtelement 24 erfüllt dahingehend eine Doppelfunktion, als dass es die Pedalkraftsimulationsanordnung 8 nicht nur gasdicht abdichtet, sondern dass es weiterhin einen Gelenkabschnitt 36 aufweist, über den die Schraubenfeder 28 der Kraftspeichereinheit 20 führbar ist.

Die Sensoranordnung 9 umfasst einen Magneten 35, der im Gleitstück 12 angeordnet ist sowie einen Hall-Sensor 37 und einen Anschluss 39. Der Hall-Sensor 37 erzeugt ein Spannungssignal in Abhängigkeit seiner Relativposition zum Magneten 35. Dieses Spannungssignal kann über den Anschluss 39 abgegriffen werden.

Durch die Anordnung des Hall-Sensors 37, der den Teil der Sensoranordnung darstellt, der außerhalb der Gleitführung 14 liegt, hinter dem Lagerschild 34 liegt der Hall-Sensor 37 in Einbaulage innerhalb des Motorraums. Dadurch wird die Verkabelung der Sensoranordnung 9 erheblich vereinfacht, da die Spritzwand des Kraftfahrzeugs 1 nicht mehr zu durchqueren ist.

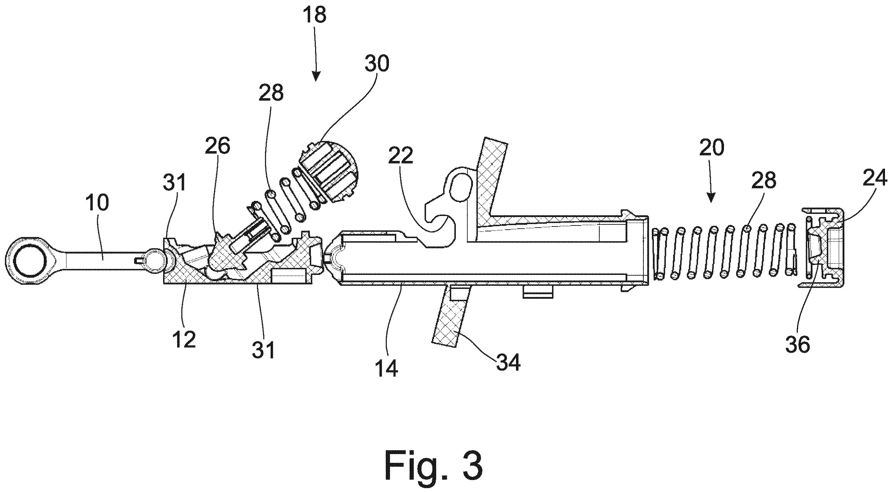

Figur 3 zeigt eine Explosionsanordnung der Pedalkraftsimulationseinrichtung 8 nach Figur 2, bei der die Einzelteile im Querschnitt voneinander separiert dargestellt sind.

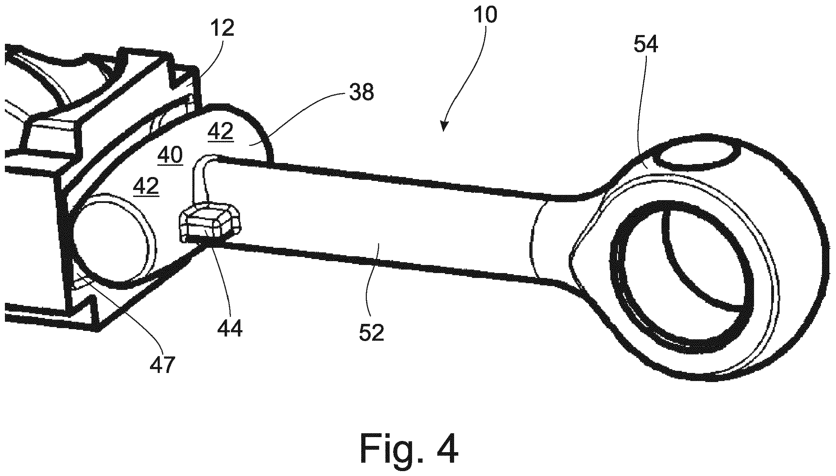

Figur 4 zeigt den Stößel 10 im Detail. Dieser weist an der Anlageseite zum Gleitstück 12 hin einen tonnenförmigen Fuß 38 auf. Der tonnenförmige Fuß 38 hat einen im Wesentlichen zylindrischen Grundkörper, der in der Mitte 40 gegenüber den Enden 42 verdickt ist. Am Gleitstück-abgewandten Bereich des Fußes 38 sind zwei Anschläge 44 vorhanden, die den Drehwinkel des Stößels 10 eingrenzen.

Am anderen Ende der Führungsstange 52 ist ein Auge 54 angeordnet, über das der Stößel 10 mit dem Pedal 6 verbindbar ist.

Das Gleitstück 12 hat eine halbtonnenförmige Ausnehmung 47, die zur Aufnahme des Fußes 38 geeignet ist.

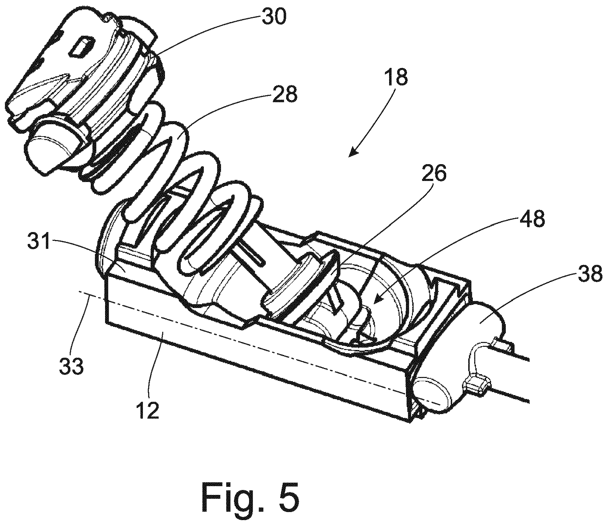

Figur 5 zeigt einen Teil der Pedalkraftsimulationsanordnung 8 im Detail. Die Kraftspeichereinheit 18 ist hier in einer perspektivischen Ansicht dargestellt. Insbesondere kann hier die Ausnehmung 48 zur Aufnahme der Kraftspeichereinheit 18 erkannt werden. Auch ist dargestellt, dass das Gleitstück 12 einen rechteckigen Querschnitt und somit parallele Außenflächen 31 besitzt.

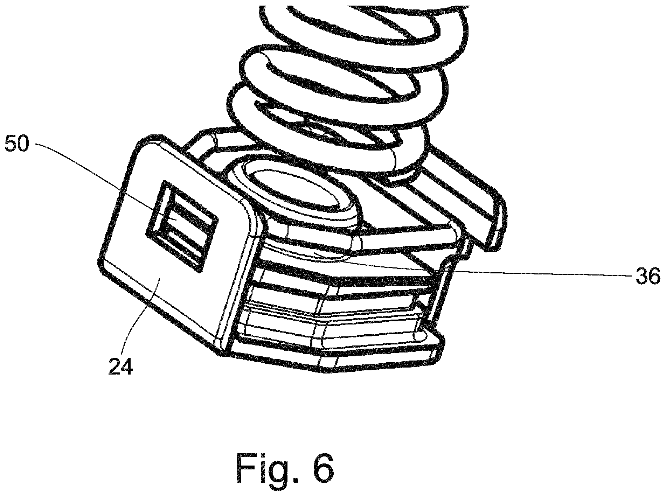

Figur 6 zeigt das Dichtelement 24 sowie die Schraubenfeder 28 der Kraftspeichereinheit 20. Das Dichtelement 24 weist einen Clipsverschluss 50 zur Anbindung des Dichtelements 24 an die Gleitführung 14 auf. Auch besitzt das Dichtelement 24 ein Gelenkabschnitt 36 zur Führung der Schraubenfeder 28.

### Bezugszeichen

- 1: Kraftfahrzeug
- 2: Antriebseinheit
- 3: Kupplung
- 4: Kupplungsaktuator
- 5: Getriebe
- 6: Pedal
- 7: Pedalblock
- 8: Pedalkraftsimulationsanordnung
- 9: Sensor
- 10: Stößel
- 12: Gleitstück
- 14: Gleitführung
- 16: Kraftspeicheranordnung
- 18: Kraftspeichereinheit
- 20: Kraftspeichereinheit
- 22: Gehäuseabschnitt
- 24: Gehäuseabschnitt
- 26: Gelenkschuh
- 28: Schraubenfeder
- 30: Gelenkgehäuse
- 31: Außenfläche
- 33: Mittellinie
- 34: Lagerschild
- 35: Magnet
- 36: Gelenkabschnitt
- 37: Hall-Sensor
- 38: Fuß
- 39: Anschluss
- 40: Mitte
- 42: Ende
- 44: Anschlag
- 46: Ausnehmung
- 47: Ausnehmung
- 48: Ausnehmung
- 50: Clipsverschluß
- 52: Führungsstange
- 54: Auge

## Patentansprüche

1. Pedalkraftsimulationsanordnung (8) mit einer Gleitführung (14), wenigstens einem darin axial verschiebbar angeordneten Gleitstück (12) und einer Kraftspeicheranordnung (16) zur Erzeugung einer Rückstellkraft auf das wenigstens eine Gleitstück (12), wobei die Kraftspeicheranordnung (16) wenigstens eine Kraftspeichereinheit (18, 20) aufweist, die seitlich am Gleitstück (12) angreift, **dadurch gekennzeichnet, dass** die Kraftspeichereinheit (18) über die Mittellinie (33) des Gleitstücks in das Gleitstück (12) eingreift.

2. Pedalkraftsimulationsanordnung nach Anspruch 1, **dadurch gekennzeichnet, dass** die Kraftspeichereinheit mehr als 60% des Durchmessers oder der Höhe des Gleitstücks (12) durchquert.

3. Pedalkraftsimulationsanordnung nach Anspruch 1 oder 2, **dadurch gekennzeichnet, dass** die Kraftspeichereinheit (18) mehr als 70% des Durchmessers oder der Höhe des Gleitstücks (12) durchquert.

4. Pedalkraftsimulationsanordnung nach einem der vorangehenden Ansprüche, **dadurch gekennzeichnet, dass** die Kraftspeichereinheit (18) mehr als 80% des Durchmessers oder der Höhe des Gleitstücks (12) durchquert.

5. Pedalkraftsimulationsanordnung nach einem der vorangehenden Ansprüche, **dadurch gekennzeichnet, dass** die Kraftspeichereinheit (18) mehr als 90% des Durchmessers oder der Höhe des Gleitstücks (12) durchquert.

6. Pedalkraftsimulationsanordnung nach einem der vorangehenden Ansprüche, **dadurch gekennzeichnet, dass** die Kraftspeichereinheit (18) gegenüber der Gleitführung (14) abgestützt ist.

7. Pedalkraftsimulationsanordnung nach einem der vorangehenden Ansprüche, **dadurch gekennzeichnet, dass** die Pedalkraftsimulationsanordnung (8) genau eine seitlich angreifende Kraftspeichereinheit (18, 20) aufweist.

8. Pedalkraftsimulationsanordnung nach einem der vorangehenden Ansprüche, **dadurch gekennzeichnet, dass** die Kraftspeichereinheit (18,) drehbar gelagert ist.

9. Pedalkraftsimulationsanordnung nach einem der vorangehenden Ansprüche, **dadurch gekennzeichnet, dass** die Kraftspeichereinheit (18) als Übertotpunktelement, insbesondere Übertotpunktfeder, ausgebildet ist.

10. Pedalkraftsimulationsanordnung nach einem der vorangehenden Ansprüche, **dadurch gekennzeichnet, dass** die Pedalkraftsimulationsanordnung (8) eine zweite Kraftspeichereinheit (20) aufweist, die an einem Ende des Gleitstücks angreift.

11. Pedalkraftsimulationsanordnung nach Anspruch 9, **dadurch gekennzeichnet, dass** die Mittenachse der Kraftspeichereinheit (20) und die Mittenachse (33) des Gleitstücks (12) einen Winkel einschließen.

12. Pedalkraftsimulationsanordnung nach einem der vorangehenden Ansprüche, **dadurch gekennzeichnet, dass** wenigstens eine Kraftspeichereinheit (18, 20) als Federanordnung ausgebildet ist.

13. Pedalkraftsimulationsanordnung nach Anspruch 12, **dadurch gekennzeichnet, dass** die Kraftspeichereinheit (18, 20) wenigstens ein Gelenkgehäuse (30) und/oder einen Gelenkschuh (26) aufweist.

14. Kupplungspedalanordnung mit einem Kupplungspedal (6) und einer damit verbundenen Pedalkraftsimulationsanordnung (8), **dadurch gekennzeichnet, dass** die Pedalkraftsimulationsanordnung (8) nach einem der vorangehenden Ansprüche ausgebildet ist.

15. Kraftfahrzeug (1) mit einer Kupplungspedalanordnung und/oder einer Pedalkraftsimulationsanordnung (8), **dadurch gekennzeichnet, dass** die Kupplungspedalanordnung nach Anspruch 14 und/oder die Pedalkraftsimulationsanordnung (8) nach einem der Ansprüche 1 bis 13 ausgebildet ist.

## Claims

1. Pedal force simulation arrangement (8) having a slide guide (14), having at least one slide piece (12) arranged in an axially displaceable manner therein, and having a force store arrangement (16) for generating a restoring force on the at least one slide piece (12), wherein the force store arrangement (16) has at least one force store unit (18, 20), which acts laterally on the slide piece (12), **characterized in that** the force store unit (18) engages into the slide piece (12) over the centre line (33) of the slide piece.

2. Pedal force simulation arrangement according to Claim 1, **characterized in that** the force store unit passes through more than 60% of the diameter or of the height of the slide piece (12).

3. Pedal force simulation arrangement according to Claim 1 or 2, **characterized in that** the force store unit (18) passes through more than 70% of the diameter or of the height of the slide piece (12).

4. Pedal force simulation arrangement according to one of the preceding claims, **characterized in that** the force store unit (18) passes through more than 80% of the diameter or of the height of the slide piece (12) .

5. Pedal force simulation arrangement according to one of the preceding claims, **characterized in that** the force store unit (18) passes through more than 90% of the diameter or of the height of the slide piece (12) .

6. Pedal force simulation arrangement according to one of the preceding claims, **characterized in that** the force store unit (18) is supported with respect to the slide guide (14).

7. Pedal force simulation arrangement according to one of the preceding claims, **characterized in that** the pedal force simulation arrangement (8) has exactly one laterally acting force store unit (18, 20).

8. Pedal force simulation arrangement according to one of the preceding claims, **characterized in that** the force store unit (18) is rotatably mounted.

9. Pedal force simulation arrangement according to one of the preceding claims, **characterized in that** the force store unit (18) is designed as an over-centre element, in particular over-centre spring.

10. Pedal force simulation arrangement according to one of the preceding claims, **characterized in that** the pedal force simulation arrangement (8) has a second force store unit (20), which acts on one end of the slide piece.

11. Pedal force simulation arrangement according to Claim 9, **characterized in that** the centre axis of the force store unit (20) and the centre axis (33) of the slide piece (12) include an angle.

12. Pedal force simulation arrangement according to one of the preceding claims, **characterized in that** at least one force store unit (18, 20) is designed as a spring arrangement.

13. Pedal force simulation arrangement according to Claim 12, **characterized in that** the force store unit (18, 20) has at least one joint housing (30) and/or one joint shoe (26).

14. Clutch pedal arrangement having a clutch pedal (6), and having a pedal force simulation arrangement (8) connected thereto, **characterized in that** the pedal force simulation arrangement (8) is designed according to one of the preceding claims.

15. Motor vehicle (1) having a clutch pedal arrangement, and/or having a pedal force simulation arrangement (8), **characterized in that** the clutch pedal arrangement is designed according to Claim 14 and/or the pedal force simulation arrangement (8) is designed according to one of Claims 1 to 13.

## Revendications

1. Dispositif de simulation de force de pédale (8) comprenant un guide coulissant (14), au moins une pièce coulissante (12) disposée de façon à coulisser axialement à l'intérieur de celui-ci et un dispositif d'accumulation de force (16) destiné à générer une force de rappel sur l'au moins une pièce coulissante (12), le dispositif d'accumulation de force (16) comprenant au moins une unité d'accumulation de force (18, 20) qui agit latéralement sur la pièce coulissante (12), **caractérisé en ce que** l'unité d'accumulation de force (18) s'engage dans la pièce coulissante (12) sur la ligne centrale (33) de la pièce coulissante.

2. Dispositif de simulation de force de pédale selon la revendication 1, **caractérisé en ce que** l'unité d'accumulation de force traverse plus de 60 % du diamètre ou de la hauteur de la pièce coulissante (12).

3. Dispositif de simulation de force de pédale selon la revendication 1 ou 2, **caractérisé en ce que** l'unité d'accumulation de force (18) traverse plus de 70 % du diamètre ou de la hauteur de la pièce coulissante (12).

4. Dispositif de simulation de force de pédale selon l'une des revendications précédentes, **caractérisé en ce que** l'unité d'accumulation de force (18) traverse plus de 80 % du diamètre ou de la hauteur de la pièce coulissante (12).

5. Dispositif de simulation de force de pédale selon l'une des revendications précédentes, **caractérisé en ce que** l'unité d'accumulation de force (18) traverse plus de 90 % du diamètre ou de la hauteur de la pièce coulissante (12).

6. Dispositif de simulation de force de pédale selon l'une des revendications précédentes, **caractérisé en ce que** l'unité d'accumulation de force (18) est supportée par rapport au guide coulissant (14).

7. Dispositif de simulation de force de pédale selon l'une des revendications précédentes, **caractérisé en ce que** le dispositif de simulation de force de pédale (8) comporte exactement une unité d'accumulation de force (18, 20) à action latérale.

8. Dispositif de simulation de force de pédale selon l'une des revendications précédentes, **caractérisé en ce que** l'unité d'accumulation de force (18) est montée de manière rotative.

9. Dispositif de simulation de force de pédale selon l'une des revendications précédentes, **caractérisé en ce que** l'unité d'accumulation de force (18) est conçue comme un élément à point mort haut, en particulier un ressort à point mort haut.

10. Dispositif de simulation de force de pédale selon l'une des revendications précédentes, **caractérisé en ce que** le dispositif de simulation de force de pédale (8) comporte une deuxième unité d'accumulation de force (20) qui s'engage à une extrémité de la pièce coulissante.

11. Dispositif de simulation de force de pédale selon la revendication 9, **caractérisé en ce que** l'axe central de l'unité d'accumulation de force (20) et l'axe central (33) de la pièce coulissante (12) forment un angle.

12. Dispositif de simulation de force de pédale selon l'une des revendications précédentes, **caractérisé en ce qu'**au moins une unité d'accumulation de force (18, 20) est conçue comme un dispositif à ressort.

13. Dispositif de simulation de force de pédale selon la revendication 12, **caractérisé en ce que** l'unité d'accumulation de force (18, 20) comporte au moins un boîtier d'articulation (30) et/ou un sabot d'articulation (26).

14. Dispositif de pédale d'embrayage équipé d'une pédale d'embrayage (6) et d'un dispositif de simulation de force de pédale (8) relié à celui-ci, **caractérisé en ce que** le dispositif de simulation de force de pédale (8) est conçu selon l'une des revendications précédentes.

15. Véhicule automobile (1) équipé d'un dispositif de pédale d'embrayage et/ou d'un dispositif de simulation de force de pédale (8), **caractérisé en ce que** le dispositif de pédale d'embrayage est conçu selon la revendication 14 et/ou le dispositif de simulation de force de pédale (8) est conçu selon l'une des revendications 1 à 13.
